# EUROPEAN PATENT APPLICATION

(11) **EP 1 671 933 A1**
(43) Date of publication of application: **21.06.2006**
(21) Application number: 04736838.6
(22) Date of filing: 15.06.2004
(51) Int. Cl.: C03B 5/173, C03B 5/04

(54) **TWO-STEP FRIT FUSION METHOD AND FURNACE**

(30) Priority: 19.08.2003 ES 200301984
(71) Applicant: Esmaltes, S.A., 12110 Alcora (Castellon) (ES)
(72) Inventor: DURAN CARRERA, Alicia Instituto de Cerámica, 28049 Madrid (ES); PASCUAL FRANCISCO, Maria J. Instituto de Cerámica, 28049 Madrid (ES); MARIJUAN MARTIN, Maria Jesus Instituto de Cerámica, 28049 Madrid (ES); BAUDIN DE LA LASTRA, Carmen Instituto de Cerámica, 28049 Madrid (ES); PENA CASTRO, Pilar Instituto de Cerámica y Vidrio, 28049 Madrid (ES); CRIADO HERRERO, Emilio Instituto de Cerámica y, 28049 Madrid (ES); BAKALI BAKALI, Jorge Juan, 12110 L'Alcora (Castellón) (ES)
(74) Representative: Ungria Lopez, Javier
(86) International application number: PCT/ES2004/000274
(87) International publication number: WO 2005/016836

(57) **Abstract**

The invention relates to a frit production method which is **characterised in that** it comprises two different fusion phases. According to the invention, the first fusion phase takes place in a tank furnace which is connected to a distribution channel by means of a neck element. The aforementioned distribution channel conveys and distributes the glass to the second fusion channels for the second fusion step. The furnace associated with inventive method consists of the following zones: a tank in which the first fusion step takes place and in which the base glass is melted, said glass having a composition that is defined as the maximum common divider of the group of frits to be produced, thereby eliminating the most corrosive components; a neck element which connects the tank to the distribution channel; a distribution channel; and one or more channels, to which the rest of the necessary raw materials are added in order to obtain each of the frits and in which the second fusion step takes place.

## Description

### OBJECT OF THE INVENTION

The object of this invention is a new technology for frit manufacture, consisting of carrying out the fusion in two steps, which has a tank fusion furnace associated with several second fusion channels. With this method, greater versatility and flexibility is achieved in frit production, the time and the waste material associated with each change of composition is reduced, it permits simultaneous production of frits of different composition and it increases the environmental efficiency and energy of the furnace.

### PRIOR ART OF THE INVENTION

A large sector of enamel plants base their production on relatively small furnaces (10-30 t/day), in which the residence times of the vitrifiable mixture is very short (less than 45 minutes) and the rate of extraction is very high. The large majority of frits have a complex composition based on silicates with additions of alkaline and alkaline-earth compounds, oxides of aluminium, zirconium, lead, zinc, boron and other minority elements. The characteristics of the fusion method together with the high corrosiveness of most frit compositions generate very severe corrosion processes on the refractory lining of the furnaces, which sharply reduce their average life.

Moreover, the short residence times of the glass in the furnace compels the use of raw materials with very small granulometry, high cost and which lead to high emission volumes of particles.

The great diversity of frits that are produced (transparent, opaque, coloured, for dense porous substrates in mono- and bi-firing etc.), along with the growing tendency to reduce stocks in storage, implies manufacturing very short production runs, giving rise to changes of composition and a high proportion of waste in each change.

### DESCRIPTION OF THE INVENTION

The method claimed in this Patent and the design of the associated alternative furnace permits most of the drawbacks mentioned above, which are inherent to present frit fusion technology, to be solved with major advantages. The associated method and furnace are based on the technology of conventional tank furnaces for fusion of hollow glass, introducing the innovation of fusion in two steps, which leads to a radical change in the existing technology for frit manufacture. This new fusion technology contributes greater versatility and flexibility to the production, it reduces the time and the waste material associated with each change of composition, it permits simultaneous production of frits of different composition and it increases the environmental efficiency and energy of the furnace.

The two-step frit fusion method and the associated two-step frit fusion furnace (hereinafter, HFF2E) offers the possibility of fusing a complete group of frits in a single furnace, being able to produce simultaneously as many different frits as the furnace has second fusion channels.

In the first step of the method, a base glass is melted in a tank furnace having conventional characteristics, though which represents advantages both in versatility of sizes and in heating systems and fuel types, temperature control systems, heat recovery and energy saving, homogenisation of the melt, lower volume of emissions, etc., compared to furnaces currently used in frit fusion. The base glass melted in this tank furnace is defined as the common composition of the group of frits to produce. The composition of this base glass is obtained as the maximum common divider of the set of compositions, as far as possible eliminating corrosive components; particularly the oxides that produce the greatest corrosion of refractory linings. The composition of this base glass must be compatible with the fusion conditions of the furnace, with maximum temperatures similar to those used in the fusion of hollow glass, for which ceiling temperatures are around 1550°C.

The second phase of the method takes place in the second fusion channels, to which the base glass is conveyed coming from the tank and where the rest of the raw materials are added in order to complete the composition of the frit it is wished to fuse. Each channel has an individual system for addition of raw materials in such a way that a different frit can be manufactured in each of them. The proportion of added composition depends on the group of frits and on the particular frit being manufactured, though in all cases it stands at between 0 and 50% by weight of the total composition. This means that the base glass can have the same composition as one of the frits to produce, which can be modified with small additions of components in the case of a group with very similar compositions, up to being a glass with a very different composition to which very considerable quantities of raw materials have to be added in order to arrive at the compositions of the frits to manufacture. This considerable added volume is the basis of the concept of two-step fusion and implies an energy input in the second fusion step that can reach 50% of the total energy used in the manufacturing process for the frit.

The raw materials used in the HFF2E will preferably be of the same type as those used in the production of hollow glass, having granulometries higher than those of the raw materials normally used in frit production. This innovation signifies a major reduction in the price of the raw materials and a notable drop in the emission volume of particles.

The two-step frit fusion furnace HFF2E associated with this new procedure consists of the following zones: tank, neck element, distribution channel and second fusion channels.

The tank furnace, where the first fusion step takes place, can have variable geometry, with a semicircular arched, lowered or flat roof, with an oscillating tray or hopper former, single or double, located laterally or frontally. The heating method is also variable, with fueloil, gas or mixed burners being able to be used, and also oxy-fueloil or oxy-gas systems in loop or transverse burner configuration. Another option is electrical fusion or mixed fusion with fueloil or gas with electrical support.

The furnace includes conventional metallic recuperators or ceramic regeneration chamber. The recovered gases are used for preheating the vitrifiable mixture and thereby increasing the energy efficiency.

The tank of the first fusion phase is separated from the distribution channel by a neck element of sufficient width in order not to give rise to choking, which favours the flow of the melt and minimises temperature losses. Neck elements of variable dimensions can likewise be used, at the same level as the sill of the furnace or submerged.

In the distribution channel the base glass coming from the tank is distributed to the different second fusion channels. Located along the width of the channel are burners or submerged electrodes which keep the temperature of the glass constant.

The second fusion channels have an access system for the base glass which can be adjusted by means of a refractory seal, a suspended metallic screen seal, or a water box seal which permits the flow of glass to be adjusted, the extraction of the frit to be decreased or increased, or even to block it totally for any possible repairs. The number of channels is variable, as are their dimensions. The length can vary between one and five metres, depending on the type of frit and on the extraction required. The width is also variable and the depth can be modified by means of a refractory heel located close to the discharge outlet of the frit.

The change of composition of frits is carried out in short times, of around an hour, which implies a very important reduction in the volume of waste or "tailings" associated with the change.

The heating of these channels is done by means of fueloil, gas or mixed burners, with oxy-fueloil or oxy-gas also being able to be included, and electrical energy can be used in whole or in part, as can radiant roof heating. Given that the second fusion step is carried out in these channels, they are connected to a recuperator common to all the channels through which all the gases coming from the fusion and combustion are eliminated and which merge together either in the main chimney or in a second chimney located at the end of the channels.

The raw materials are added to the second fusion channels via variable geometry forming devices, of the oscillating tray or frog's-mouth hopper type, fed from the mixer by means of conveyor belts. The position of these feeders can be modified by locating them along the channel in order to optimise the residence time of the molten frit and its final quality.

The channels can include stirrers, installed together with the fall of the raw materials added in each channel in order to ensure homogeneity of the melt and present the formation of a surface layer of lower viscosity and greater rate of advance.

The molten frit is discharged through an outlet located at the end of each channel, and is cooled suddenly, it "frits" on the water by the usual procedure.

The materials used as lining for the different zones are the usual ones in fusion furnaces for hollow glass and frits. The work faces of the hearth and the upright feet of the tank furnace are preferably made from electrofused refractory materials of alpha-beta alumina, alumina-zirconia-silica (AZS) or zirconia, isostatically pressed materials of zircon or chromite, or high quality silica refractory materials resistant to corrosion. The safety lining consists of a layer of unshaped refractory material based on AZS or a silico-aluminium shaped material, followed by a layer of insulating material. The roof and the covers for the second fusion channels can be made from refractory materials of silica, silimanite or mullite, and the use of refractory materials of alpha-beta alumina is also considered.

In the second fusion channels, which are subjected to greater corrosive attack on account of the composition of the frits and the greater speed of the glass, electrofused refractory materials of alpha-beta alumina, AZS or zirconia are used, as are zircon or chromite materials obtained from isostatic pressing in the contact zone with the molten frit. The discharge outlets are preferably made of chromite though AZS manufactured by electrofusing can also be used.

The furnace includes temperature control systems in the roof and hearth of the tank, in the neck element, in the distribution channel at the entrance of the second fusion channels, and in the vicinity of the discharge outlets. It also includes a flow control system at the entrance of the second fusion channels and an extraction control system in each channel.

The characteristics of the HFF2E furnace imply a significant advance compared to present-day furnaces for frit fusion, since they permit:
- A more versatile and flexible production permitting short runs to be produced and avoiding excess of warehouse stocks.
- Extension of the average life of the furnaces, especially of the refractory materials of the tank of the first fusion phase.
- A considerable energy saving.
- A saving both in cost and in the quantity of raw materials.
- Reduction of particle emissions and emissions of contaminating elements via the chimney.
- Reduction in the generation of solid waste, both of "tailings" of glass corresponding to each change of composition and of the quantity of corroded refractory material due to the increase in the average life of the furnace.

Below, in order to facilitate a better understanding of this specification and forming an integral part thereof, a series of figures is attached in which, by way of illustration only and not limiting, the object of the invention has been represented.

### BRIEF DESCRIPTION OF THE DRAWINGS

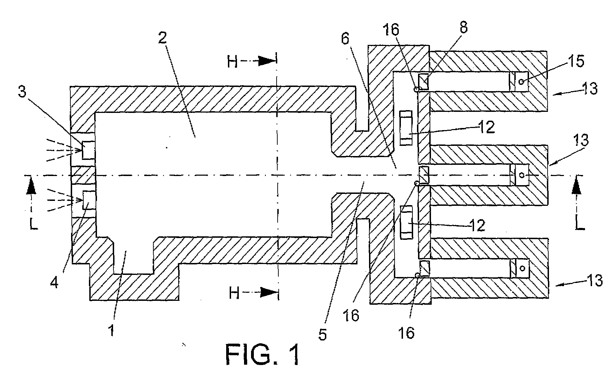

**Figure 1.-** Shows a plan view of the inventive furnace.

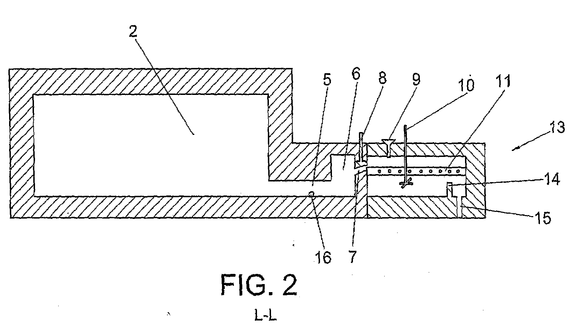

**Figure 2.-** Shows a sectioned elevation view of the furnace.

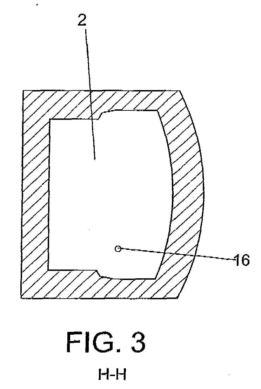

**Figure 3.-** Shows a view in transverse section of a tank forming part of the inventive furnace unit.

### DESCRIPTION OF THE PREFERRED MANNER OF EMBODIMENT

Considering the numbering adopted in the figures, the frit manufacturing method takes place as follows.

Taking place in a tank 2 is the first fusion step consisting of the fusion of the raw materials for producing the base glass (see example of manufacture of group of frits described further below). Said raw materials are introduced into the tank via a former 1. The energy necessary for the fusion is supplied via two burners 3 and 4 which function on an alternating basis in a loop configuration and the outlet of gases takes place via the metallic recuperators located above the burners 3 and 4. The molten base glass in the tank passes to a distribution channel 6 via a neck element 5. Located in the distribution channel are some burners 12 with the aim of keeping the temperature of the glass constant, and the glass then passes to the different second fusion channels 13, by overflow. Access to the second fusion channels 13 is controlled by means of a regulating system with a water box 8 which controls certain passages 7. In the second fusion channel the addition takes place of the necessary raw materials for completing the final composition of the frit (see example of manufacture of group of frits described further below) via a frog's-mouth hopper 9 and the mixture sinks and is stirred by means of the stirrer 10. The energy necessary for the second fusion step is supplied by burners 11. The molten frit overflows via a heel 14 and is discharged via an outlet 15. The furnace includes thermocouples 16 in the roof, in the sill of the neck element and at the entrance of the second fusion channels 13. The discharge of gases takes place by means of metallic recuperators which converge in a second chimney located on the second fusion channels.

Described below is a particular example of manufacture of a group of frits in which a group of three frits are melted starting from the following raw materials: quartz, potassium feldspar, sodium carbonate, dolomite, limestone, calcium carbonate, cobalt oxide, boric acid, zircon flour and zinc oxide. The composition of the frits and of the corresponding base glass is detailed in Table 1.

**Table 1. Composition of the frits and of their corresponding base glass.**

| | BASE GLASS | FRIT 1 | FRIT 2 | FRIT 3 |
|---|---|---|---|---|
| SiO₂ | 68.5 | 56.5 | 56.4 | 56.4 |
| Al₂O₃ | 6.5 | 5.4 | 5.4 | 5.1 |
| B₂O₃ | 11.5 | 9.5 | 9.4 | 8.9 |
| CaO | 4.5 | 7.3 | 7.4 | 5.2 |
| MgO | 0.07 | 2.5 | 2.5 | 1.2 |
| K₂O | 4.1 | 3.3 | 3.33 | 3.2 |
| Na₂O | 4.7 | 3.8 | 3.8 | 3.6 |
| TiO₂ | 0.04 | 0.03 | 0.03 | 0.03 |
| Fe₂O₃ | 0.07 | 0.04 | 0.06 | 0.04 |
| ZnO | | 11.6 | 11.6 | 9 |
| CoO | | | 0.05 | |
| ZrO₂ | | | | 7.3 |
| **TOTAL** | 99.98 | 99.97 | 99.97 | 99.97 |

The fusion of the base glass takes place at a maximum temperature of 1550 °C.

In the first second fusion channel 20% by weight of composition (zinc oxide and dolomite) is added in order to obtain frit 1, which is transparent and colourless. In the second second fusion channel 20% by weight of composition (zinc oxide, dolomite and CoO) is added in order to obtain frit 2, which is transparent and blue. In the third second fusion channel 23% by weight of composition (zinc oxide, dolomite and zircon flour) is added in order to obtain frit 3, which is opaque, white and brilliant. The fusion temperature in the second phase channels is 1450 °C.

## Claims

1. **FRIT MANUFACTURE METHOD, characterised in that** it comprises two different fusion steps, where the first step takes place in a tank furnace, connected by a neck element to a distribution channel, which conveys and distributes the glass to the second fusion channels where the second fusion step takes place, and in which:
- in the tank of the first phase, base glass is melted, defined as the composition common to a group of frits, calculated as the maximum common divider of that group of frits and as far as possible eliminating the most corrosive components;
- in the second fusion channels the rest of the raw materials are added to the base glass up to completing the final compositions of the frits to produce, the proportion of the added composition being between 0 and 50% of the final composition, with as many frits of different composition being able to be manufactured simultaneously as the oven has second fusion channels.

2. **TWO-STEP FRIT FUSION FURNACE** (HFF2E), according to the method of claim 1, **characterised in that** it comprises:
a tank in which the first fusion step takes place, in which the glass known as base glass is melted, whose composition is defined as the maximum common divider of the group of frits to produce, as far as possible eliminating the most corrosive components thereof;
- A neck element, which connects the tank with the distribution channel;
- a distribution channel;
- one or several second fusion channels, to which is conveyed the base glass coming from the tank, to which is added the rest of the raw materials necessary for obtaining each of the frits to be produced, and where the second fusion step takes place, with as many frits of different composition being able to be manufactured simultaneously as the oven has second fusion channels.

3. **TWO-STEP FRIT FUSION FURNACE** (HFF2E), according to claim 2, **characterised in that** the tank furnace has variable geometry, with loop or transverse burner configuration, and the fusion is carried out using fueloil, gas or mixed burners, or oxy-fueloil or oxy-gas systems, or by means of electrical energy or with a combined system of fueloil or gas with electrical support.

4. **TWO-STEP FRIT FUSION FURNACE** (HFF2E), according to claims 2 and 3, **characterised in that** the fusion in the second fusion channels is done using fueloil, gas or mixed burners, or oxy-fueloil or oxy-gas systems, or by means of electrical energy or with a combined system of fueloil or gas with electrical support, or by means of radiant roof heating.

5. **TWO-STEP FRIT FUSION FURNACE** (HFF2E), according to claims 2 to 4, **characterised in that** the number of second fusion channels is variable as is their dimension, and these channels have an access system for the base glass adjustable by means of a refractory seal, a suspended metallic screen seal, or a water box seal which permits the flow of glass to be adjusted, the extraction of the frit to be decreased or increased, or even to block it totally for any possible repairs.

6. **TWO-STEP FRIT FUSION FURNACE** (HFF2E), according to claims 2 to 5, **characterised in that** the raw materials are added to the second fusion channels via variable geometry forming devices, of the oscillating tray or frog's-mouth hopper type, and the position of these feeders can be modified locating them along the channel in order to optimise the residence time of the molten frit and its final quality.

7. **TWO-STEP FRIT FUSION FURNACE** (HFF2E), according to claims 2 to 6, **characterised in that** it includes conventional metallic recuperators or ceramic regeneration chamber and the recovered gases are used for preheating the vitrifiable mixture and increasing the energy efficiency.

8. **TWO-STEP FRIT FUSION FURNACE** (HFF2E), according to claims 2 to 7, **characterised in that** it includes temperature control systems in the roof and hearth of the tank, in the neck element, in the distribution channel at the entrance of the second fusion channels, and in the vicinity of the discharge outlets, stirring systems in the second fusion channels, a flow control system at the entrance to the second fusion channels and an extraction control system in each channel.
